# EUROPÄISCHE PATENTSCHRIFT

(11) **EP 2 130 423 B1**
(45) Veröffentlichungstag und Bekanntmachung des Hinweises auf die Patenterteilung: **25.09.2013**
(21) Anmeldenummer: 09006985.7
(22) Anmeldetag: 26.05.2009
(51) Int. Cl.: A01B 69/00, B62D 1/28

(54) **Landwirtschaftliches Fahrzeug und Betriebsverfahren dafür**
Agricultural vehicle and operating method for same
Véhicule agricole et procédé de fonctionnement correspondant

(30) Priorität: 06.06.2008 DE 102008027282
(43) Veröffentlichungstag der Anmeldung: 09.12.2009
(73) Patentinhaber: CLAAS Industrietechnik GmbH, 33106 Paderborn (DE)
(72) Erfinder: Ellermann, Klaus Martin, 32791 Lage (DE); Konrad, Helmut G., 33154 Salzkotten (DE); Hansen, Thomas, 33142 Büren (DE)
(74) Vertreter: Heuer, Wilhelm

(56) Entgegenhaltungen:
- EP-A1- 1 219 158
- EP-A2- 0 856 453
- EP-A2- 1 219 153
- DE-A1-102005 050 310
- US-B1- 6 198 992
- US-B1- 6 314 348

## Beschreibung

Die vorliegende Erfindung betrifft ein Verfahren zum gemeinsamen Betreiben zweier landwirtschaftlicher Fahrzeuge sowie ein zur Durchführung des Verfahrens geeignetes Fahrzeug.

Ein Erntefahrzeug, das über keinen eigenen Ernteguttank verfügt, wie insbesondere ein Feldhäcksler, muss während des Aberntens eines Feldes ständig von einem Transportfahrzeug begleitet sein, auf das das von dem Feldhäcksler aufgenommene und gehäckselte Erntegut kontinuierlich übergeladen wird. Um ein verlustfreies Überladen zu ermöglichen, müssen die Fahrzeuge auf der gesamten Fahrt sich exakt koordiniert bewegen, um sicherzustellen, dass sich die Auswurföffnung eines Auswurfkrümmers des Feldhäckslers exakt über einer Ladefläche des Transportfahrzeugs befindet.

Ein Erntefahrzeug mit eingebautem Tank, insbesondere ein Mähdrescher, muss zwar nicht auf seinem gesamten Weg von einem Transportfahrzeug begleitet werden, doch ist auf einem Wegstück, auf dem übergeladen wird, die gleiche Koordination mit dem das Erntegut übernehmenden Transportfahrzeug erforderlich wie im Falle eines Feldhäckslers.

Da die Aufmerksamkeit des Fahrers des Erntefahrzeugs durch die Steuerung von Funktionsaggregaten wie etwa Erntevorsatz, Dresch- oder Häckselwerk stark in Anspruch genommen ist, wird im Allgemeinen vom Fahrer des Transportfahrzeugs verlangt, dass dieser dem Kurs des Erntefahrzeugs exakt folgt. Diese Aufgabe erfordert ein hohes Maß an Aufmerksamkeit und Übung. Häufig, insbesondere wenn sich die Ladefläche auf einem Anhänger des Transportfahrzeugs befindet, hat das Transportfahrzeug einen Vorsprung von einigen Metern vor dem Erntefahrzeug, und wenn letzteres eine Kurve fahren muss, dann muss das Transportfahrzeug früher als das Erntefahrzeug in die Kurve eintreten. D.h zu einem Zeitpunkt, an dem das Erntefahrzeug noch geradeaus fährt, muss das Transportfahrzeug eine Richtung einschlagen, auf der es mit dem Erntefahrzeug zusammenstoßen würde, wenn letzteres nicht auch seine Richtung korrigiert. Ein solches Manöver erfordert beträchtliche Übung, da es den im Straßenverkehr antrainierten Reflexen zuwider läuft. Ein weiteres Problem bei der Kurvenfahrt resultiert aus der Tatsache, dass ein Anhänger eine Kurve mit kleinerem Radius durchfährt als das ihn ziehende Fahrzeug. Der Fahrer des Transportfahrzeugs muss daher den Weg des Erntefahrzeugs durch eine Kurve abschätzen, noch bevor das Erntefahrzeug in die Kurve eingetreten ist, und dann den Radius, auf dem das Transportfahrzeug die Kurve durchfährt, so regeln, dass für den Anhänger ein Radius resultiert, auf dem dieser in Bezug auf das Erntefahrzeug in Überladeposition bleibt. Hinzu kommt, dass das Transportfahrzeug, um die Kurve mit größerem Radius als das Erntefahrzeug zu fahren, schneller als letzteres fahren muss. Es ist daher extrem schwierig, während des Überladens eine Kurve zu fahren. Bei einem Mähdrescher kann das Überladen in der Kurve unterbrochen werden und wieder aufgenommen werden, wenn beide Fahrzeuge am Beginn einer geraden Strecke wieder eine geeignete Position nebeneinander erreicht haben. Im Falle eines Feldhäckslers hingegen geht Erntegut verloren, wenn bei Kurvenfahrt im Erntebetrieb die Überladeposition nicht beibehalten werden kann.

Um diese Probleme zu lindern, ist bereits in EP 121 91 58 B1 vorgeschlagen worden, das Transportfahrzeug während des Überladens vom Erntefahrzeug aus automatisch fernzusteuern, so dass es jeder Geschwindigkeitsänderung und Kurskorrektur des Erntefahrzeugs folgt. Ein entgegengesetzter Ansatz, nämlich das Erntefahrzeug vom Transportfahrzeug aus fernzusteuern, ist in DE 100 57 374 A1 beschrieben.

Diese bekannten Techniken sind zwar sehr wirksam, um die Ladefläche des Transportfahrzeugs jederzeit unter einer Auswurföffnung des Erntefahrzeugs zu halten und Verluste an Erntegut während des Überladens auf ein Minimum zu begrenzen, doch führt gerade die Wirksamkeit dieser Techniken zu einem neuen Problem. Während bei manueller Steuerung der Fahrzeuge die Position der Auswurföffnung über der Ladefläche nicht exakt konstant gehalten werden kann und vor allem in der Fahrzeuglängsrichtung schwankt, führt die Unterdrückung solcher Schwankungen durch die Fernsteuerung eines Fahrzeugs zu einer ungleichmäßigen Verteilung des Ernteguts auf der Ladefläche. So kann es leicht geschehen, dass das Überladen abgebrochen werden muss, bevor die Ladekapazität des Transportfahrzeugs erreicht ist, weil sich an einer Stelle der Ladefläche das Erntegut bis in Höhe der Bordwand türmt. Ein korrigierender Eingriff des Fahrers des ferngesteuerten Fahrzeugs ist jedoch nicht möglich, denn da der Fahrer in einer Notfallsituation jederzeit in der Lage sein muss, wieder die Kontrolle über das ferngesteuerte Fahrzeug zu erlangen, führt jeder steuernde Eingriff des Fahrers zum Rückschalten vom ferngesteuerten in den fahrergesteuerten Modus.

Aus DE 10 2005 050 310 Al ist ein Verfahren zur Steuerung eines unbemannten Fahrzeugs bekannt, bei dem eine autonome Steuerung des Fahrzeugs durch den Eingriff eines Bedieners unterbrochen werden kann. Der Eingriff des Bedieners an einer Eingabeeinrichtung führt dazu, dass diese von einem Stellglied getrennt wird, durch das die Eingabeeinrichtung im autonomen Modus gesteuert wird. Der Bediener muss daher, solange die Unterbrechung des autonomen Modus anhält, diese Eingabeeinrichtung ersetzen, was insbesondere im Moment der Kontrollübernahme des Benutzers schwierig ist und zu unerwünschten Bewegungen des Fahrzeugs führen kann.

Aufgabe der vorliegenden Erfindung ist, ein Überladeverfahren und dafür geeignete Fahrzeuge anzugeben, die einerseits das Überladen unter Fernsteuerung eines Fahrzeugs unterstützen, andererseits aber eine gute Ausnutzung der Ladekapazität des Transportfahrzeugs ermöglichen.

Die Aufgabe wird zum einen bei einem landwirtschaftlichen Fahrzeug, welches einen ferngesteuerten Fahrmodus unterstützt, in welchem eine Fahrbewegung des Fahrzeugs durch von außen empfangene Information bestimmt wird, dadurch gelöst, dass das Fahrzeug eingerichtet ist, im ferngesteuerten Fahrmodus im Falle eines Fahrereingriffs eine durch den Fahrereingriff bestimmte Korrektur an der von außen empfangenen Information vorzunehmen.

Um auch unabhängig von von außen empfangener Information fahren zu können, ist das Fahrzeug vorzugsweise zwischen einem fahrergesteuerten Fahrmodus, in welchem die Fahrtbewegung des Fahrzeugs durch einen Fahrer bestimmt wird, und dem ferngesteuerten Fahrmodus umschaltbar.

Es ist zweckmäßig, zwischen einem ersten Typ und einem zweiten Typ von Steuereingriffen des Fahrers zu unterscheiden. So kann das Fahrzeug automatisch in den fahrergesteuerten Modus zurückschalten, wenn ein Eingriff des Fahrers vom ersten Typ an der Steuereinrichtung erfasst wird, während unter Beibehaltung des ferngesteuerten Modus die durch den Fahrereingriff bestimmte Korrektur an der von außen empfangenen Information vorgenommen wird, wenn ein Eingriff vom zweiten Typ erfasst wird.

Die Steuereinrichtung umfasst im Allgemeinen wenigstens ein Steuerelement, das in wenigstens einem Freiheitsgrad kontinuierlich bewegbar ist, wie etwa ein Lenkrad, ein Fahrpedal, ein Bremspedal oder dergleichen. Als ein Eingriff des ersten Typs kann dann eine Bewegung des Steuerelements mit wenigstens einem Freiheitsgrad erfasst werden, deren Amplitude einen Grenzwert erreicht oder überschreitet, wo hingegen eine Bewegung des Steuerelements in dem wenigstens einem Freiheitsgrad, deren Amplitude den Grenzwert nicht überschreitet, als Eingriff des zweiten Typs erfasst wird. Mit anderen Worten gibt es eine Schwelle des Lenkradeinschlags, der Fahrpedal- oder Bremspedalbetätigung, ab der die Betätigung zum Umschalten in den fahrergesteuerten Modus führt, während bei einer Betätigung unterhalb des Grenzwertes der ferngesteuerte Modus erhalten bleibt und die Bewegung des Fahrzeugs lediglich entsprechend der Betätigung des Steuerelements korrigiert wird. So erhält der Fahrer in einem Notfall, der im Allgemeinen eine heftige Betätigung des Steuerelementes erfordert, die Kontrolle über das Fahrzeug zurück, während bei einer sanften Betätigung, die für eine Korrektur der Position der Fahrzeuge relativ zueinander ausreichend ist, der ferngesteuerte Modus erhalten bleibt.

Wenn das Steuerelement ein Fahrpedal ist, kann als Grenzwert einfach eine Anschlagstellung des Fahrpedals herangezogen werden.

Da bei einer Notfallreaktion der Fahrer das Steuerelement im Allgemeinen mit hoher Geschwindigkeit betätigen wird, kann auch die Geschwindigkeit der Betätigung des Steuerelements als Unterscheidungskriterium zwischen einem Eingriff des ersten Typs und einem Eingriff des zweiten Typs herangezogen werden.

Im Fahrzeug kann eine Anzeigeeinrichtung vorgesehen sein, die dem Fahrer eine Umschaltung zwischen ferngesteuertem und fahrergesteuertem Modus anzeigt. So ist der Fahrer gewarnt, wenn aufgrund eines Steuereingriffs das Fahrzeug in den fahrergesteuerten Modus zurückschaltet und er wieder für eine korrekte Steuerung sorgen muss. Die Anzeigeeinrichtung kann auch dazu dienen, dem Fahrer anzuzeigen, wie weit ein Steuereingriff von der Umschaltschwelle entfernt ist, selbst wenn es nicht zur Umschaltung kommt. Dies gibt dem Fahrer zusätzliche Sicherheit, wenn er einen Steuereingriff vornehmen muss.

Denkbar ist auch, ein Hilfsbedienelement mit wenigstens zwei Zuständen, betätigt bzw. nicht betätigt, vorzusehen, und eine Bewegung des Steuerelements je nach Zustand des Hilfsbedienelements als Eingriff des ersten Typs oder als Eingriff des zweiten Typs zu erfassen. Mit anderen Worten kann der Fahrer durch Betätigen des Hilfsbedienelements zusammen mit dem Steuerelement entscheiden, ob der ferngesteuerte Modus erhalten bleiben soll oder nicht.

Eine andere zweckmäßige Möglichkeit ist, ein erstes Steuerelement zum Steuern einer unter Fahrtrichtung und -geschwindigkeit gewählten Größe und ein zweites Steuerelement zum Beeinflussen derselben Größe wenigstens im ferngesteuerten Modus vorzusehen, wobei das Fahrzeug eingerichtet ist, einen Fahrereingriff am ersten Steuerelement als Eingriff des ersten Typs und einen Fahrereingriff am zweiten Steuerelement als Eingriff des zweiten Typs zu erfassen.

Erstes und zweites Steuerelement müssen nicht notwendigerweise redundant sein; einer bevorzugten Ausgestaltung zufolge kann z.B. das erste Steuerelement ein Bremspedal und das zweite Steuerelement ein Kupplungspedal sein. So sind zwar die beiden Steuerelemente nicht funktionsgleich, aber dennoch ist jedes von ihnen geeignet, eine Verzögerung des Fahrzeug herbeizuführen.

Eine Beeinflussung der unter Fahrtrichtung und -geschwindigkeit gewählten Größe kann indirekt auch dadurch erfolgen, dass an dem zweiten Bedienelement eine Sollposition des Fahrzeugs relativ zu einem Bezugspunkt einstellbar ist. Die Auswahl der zum Realisieren der Sollposition erforderlichen Steuermanöver kann dann einem Automaten überlassen bleiben.

Um dem Fahrer die Auswahl der Sollposition zu erleichtern, ist zweckmäßigerweise ein Anzeigeelement zum Darstellen der Sollposition vorgesehen.

Zum Empfang der Fahrtrichtung und -geschwindigkeit bestimmenden Information im ferngesteuerten Modus ist vorzugsweise eine Funkschnittstelle vorgesehen. Indem ein anderes Fahrzeug Steuerbefehle, die es z.B. von seinem Fahrer empfängt, an die Funkschnittstelle aussendet, können beide Fahrzeuge synchron auf diese Steuerbefehle reagieren.

Die Funkschnittstelle ist zweckmäßigerweise eingerichtet, ihrerseits bei einem Übergang in den fahrergesteuerten Modus eine Meldung auszusenden. Wenn das Fahrzeug, dessen Modus umschaltbar ist, das Transportfahrzeug ist, während das Erntefahrzeug die Fahrtrichtung und -geschwindigkeit bestimmende Information aussendet, dann kann das Erntefahrzeug bei Empfang der Meldung das Überladen von Erntegut automatisch stoppen und so Erntegutverluste verhindern. Falls das Fahrzeug mit umschaltbarem Modus das Erntefahrzeug ist, und das Transportfahrzeug die Meldung empfängt, dann kann dies zweckmäßigerweise dem Fahrer des Transportfahrzeugs angezeigt werden, um ihn davon in Kenntnis zu setzen, dass das Überladen beendet ist und er beim Weiterfahren das Erntefahrzeug nicht mehr zu berücksichtigen braucht.

Umgekehrt kann es auch sinnvoll sein, dass die Funkschnittstelle bei einem Übergang in den ferngesteuerten Modus eine Meldung aussendet, z.B. um das Überladen von Erntegut vom Erntefahrzeug in das Transportfahrzeug freizugeben oder um den Fahrer des Transportfahrzeugs davon in Kenntnis zu setzen, dass er beim Steuern das Erntefahrzeug zu berücksichtigen hat.

Die Fahrzeuge können beliebige Paare von zusammen arbeitenden landwirtschaftlichen Fahrzeugen sein, deren Zusammenarbeit die Übergabe von Material, egal ob bei der Bergung des Materials vom Feld oder bei seiner Ausbringung, erfordert. Solche Paare können insbesondere umfassen: Erntefahrzeug und Transportfahrzeug, Transportfahrzeug und Sämaschinne, Transportfahrzeug und Düngerstreuer, etc.

Die Aufgabe wird ferner gelöst durch ein Verfahren zum gemeinsamen Betreiben zweier landwirtschaftlicher Fahrzeuge (1, 2) mit den Schritten:
- Übertragen von eine Fahrbewegung eines der beiden Fahrzeuge beschreibender Information von dem einen an das andere Fahrzeug;
- Steuern des anderen Fahrzeugs anhand der übertragenen Information;
- Erfassen von Steuereingriffen des Fahrers des anderen Fahrzeugs;
- Korrigieren der Information anhand eines erfassten Steuereingriffs.

weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1:: eine schematische Darstellung einer Anwendungssituation der Erfindung;
- Fig. 2:: ein Flussdiagramm der Steuerung des Transportfahrzeugs aus Fig. 1;
- Fig. 3:: eine Anzeigeeinrichtung in der Fahrerkabine des Transportfahrzeugs gemäß einer zweiten Ausgestaltung der Erfindung;
- Fig. 4: ein Flussdiagramm der Steuerung des Transportfahrzeugs gemäß der zweiten Ausgestaltung.

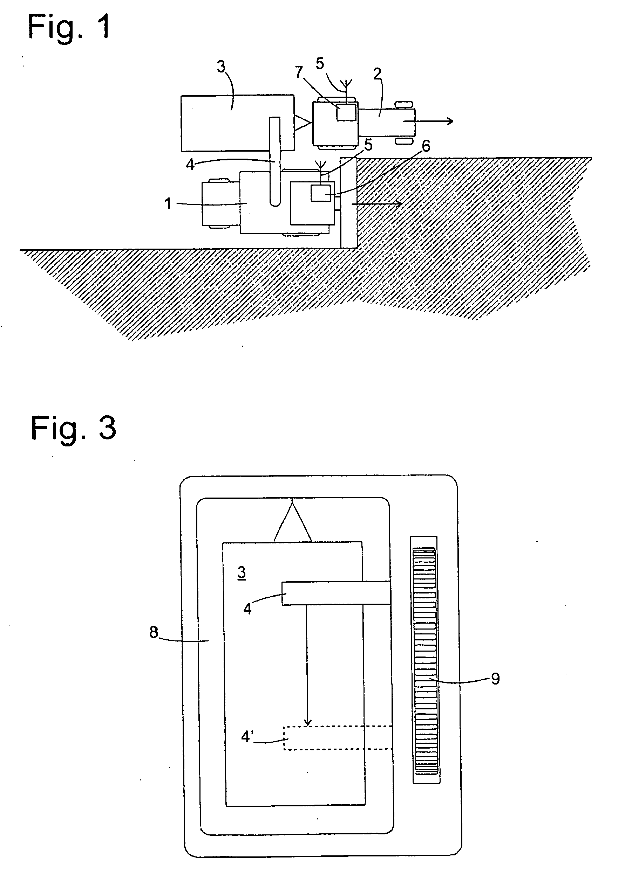

Fig. 1 zeigt in einer schematischen Draufsicht einen Mähdrescher 1 und ein Transportfahrzeug, hier einen Schlepper 2 mit Anhänger 3, die sich gemeinsam über eine Ackerfläche bewegen, um geerntetes Korn aus dem Korntank des Mähdreschers 1 mit Hilfe eines Auslaufrohrs 4 des Mähdreschers 1 auf den Anhänger 3 überzuladen. Beide Fahrzeuge, der Mähdrescher 1 und der Schlepper 2, sind während des Überladens in Bewegung, und der Mähdrescher 1 erntet gleichzeitig einen in der Fig. schraffiert dargestellten, mit Korn bestandenen Teil der Ackerfläche ab.

Beide Fahrzeuge verfügen jeweils über eine Funkschnittstelle 5 für die bidirektionale Kommunikation miteinander und für den Empfang von Satellitensignalen, z.B. vom GPS-Typ, die es einem Steuerprozessor 6 des Mähdreschers 1 ermöglichen, die Position und den aktuellen Kurs des Mähdreschers 1 herauszufinden.

Wenn der Füllstand eines eingebauten Korntanks des Mähdreschers 1 einen kritischen Wert überschreitet, erhält der Schlepper 2 über seine Funkschnittstelle 5 eine Anweisung, sich mit dem Mähdrescher 1 zu treffen, um das geerntete Korn zu übernehmen. Die Anweisung kann direkt vom Mähdrescher 1 ausgehen, sei es, indem der Fahrer des Mähdreschers 1 die Anweisung bewusst sendet, oder indem der Steuerprozessor 6 des Mähdreschers 1 bei Erreichen des kritischen Füllstandes des Tanks diese automatisch aussendet, oder sie kann von einer zentralen Leitstelle ausgehen, die den Überladebedarf mehrerer koordiniert eingesetzter Mähdrescher 1 überwacht und ein oder mehrere Transportfahrzeuge 2 je nach Bedarf zu den Mähdreschern 1 beordert.

Sobald der Schlepper 2 eine Stellung neben dem Mähdrescher 1 erreicht hat, in der ein Überladen möglich ist, schaltet der Fahrer des Schleppers 2 dessen Steuerprozessor 7 von einem fahrergesteuerten Modus in einen durch den benachbarten Mähdrescher 1 ferngesteuerten Modus um, in welchem Geschwindigkeit und Kurs des Schleppers 2 jeweils entsprechend per Funk vom Mähdrescher 1 ausgesendeten Befehlen angepasst werden. (Denkbar wäre auch eine vereinfachte Ausgestaltung, bei der nur der Kurs oder nur die Geschwindigkeit an den Schlepper übertragen werden und die korrekte Steuerung des jeweils anderen Parameters in der Verantwortung des Schlepperfahrers bleibt.)

Indem der Mähdrescher 1 seine eigene Fahrtrichtung in den übertragenen Befehlen als eine Winkelabweichung von einer mit Hilfe der GPS-Signale festlegbaren Bezugsrichtung angibt, ist der Schlepper 2 in der Lage, eine zur Fahrtrichtung des Mähdreschers 1 exakt parallele Fahrtrichtung einzustellen, ohne dafür Sensoren zum direkten Messen seiner eigenen Position im Bezug auf den Mähdrescher 1 zu benötigen. Vorzugsweise sind jedoch solche Sensoren, z.B. Ultraschall-Abstandssensoren vorhanden, um dem Steuerprozessor 7 eine automatische Korrektur von Kursabweichungen zu ermöglichen, die aus einer Ungenauigkeit der Lenkung der Fahrzeuge 1, 2 resultieren.

Der Mähdrescher 1 kann von einem Fahrer gelenkt sein, oder er kann seinerseits von einem ortsfesten Leitrechner aus ferngesteuert sein. In letzterem Falle kann der Schlepper 2 seine Steuerungsinformation anstatt vom Mähdrescher 1 auch direkt vom Leitrechner aus erhalten. Als weitere Alternative kommt eine automatische Lenkung des Mähdreschers in Betracht, z.B. durch Erfassung des Randes der noch abzumähenden Feldfläche mit Hilfe eines Lasersensors oder dergleichen.

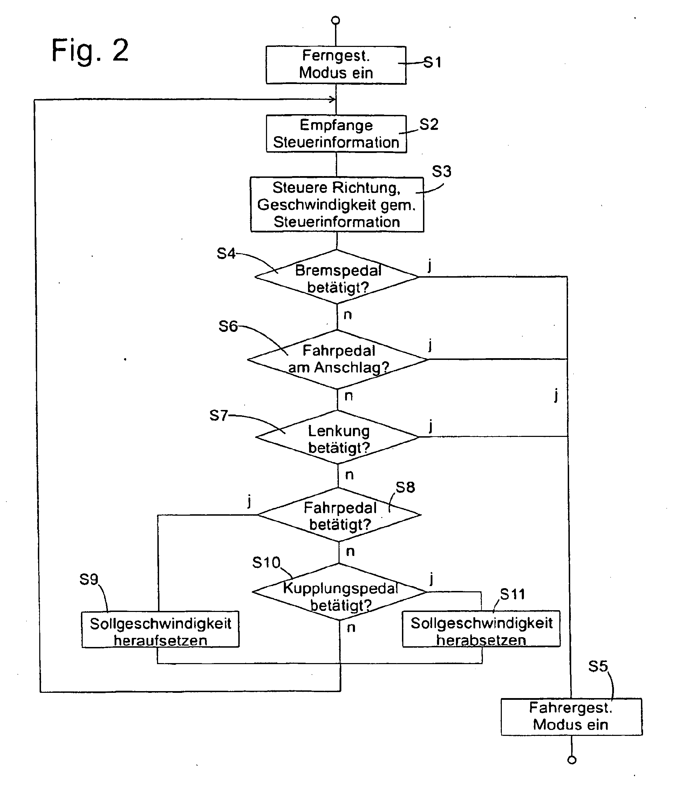

Fig. 2 veranschaulicht anhand eines Flussdiagramms im Detail die Arbeitsweise eines Steuerprozessors 7 des Schleppers 2 während des Überladens im ferngesteuerten Modus. Das Flussdiagramm setzt ein mit einem Schritt S1 des Einschaltens des ferngesteuerten Modus, z.B. durch Betätigen einer Taste am Armaturenbrett des Schleppers 2, nachdem dieser eine zum Überladen geeignete Position an der Seite des Mähdreschers 1 erreicht hat, in welcher sich das freie Ende des Auslaufrohrs 4 sicher über dem Anhänger 3 befindet. Der Schlepper 2 bestätigt den Übergang in den ferngesteuerten Modus durch ein Funksignal. Ab diesem Zeitpunkt werden Fahrtrichtung und Fahrgeschwindigkeit des Schleppers 2 festgelegt durch Steuerinformationen, die dieser von außen empfängt.

Im einfachsten Falle umfasst die Steuerinformation per Funk vom Mähdrescher 1 übertragene Angaben über dessen eigene Fahrtrichtung und Geschwindigkeit, die am Schlepper 2 identisch eingestellt werden. Um zu verhindern, dass die beiden Fahrzeuge im Betrieb auseinander driften, empfängt der Schlepper 2 vorzugsweise in Schritt S2 noch weitere Steuerinformationen, beispielsweise mit Hilfe von Ultraschallsensoren ermittelte Informationen über den Abstand zwischen Mähdrescher 1 und Schlepper 2 und die Richtung, in der, bezogen auf ein am Schlepper 2 festes Koordinatensystem, der Mähdrescher 1 zu finden ist. Der Schlepper 2 stellt in Schritt S3 seine Fahrtrichtung und Geschwindigkeit entsprechend den vom Mähdrescher 1 gesendeten Daten, ggf. korrigiert um eine mit Hilfe der Ultraschallsensoren erfasste Drift, ein. Indem die Schritte S2, S3 ausreichend häufig wiederholt werden, können die Fahrzeuge 1, 2 beliebig lang nebeneinander herfahren, ohne dass sich die Position des Auslaufrohrs 4 über der Ladefläche des Anhängers 3 wesentlich ändert.

Wenn der Mähdrescher 1 eine Kurve fahren muss, während der Schlepper 2 sich im ferngesteuerten Modus befindet, so kann der Mähdrescher beim Aussenden der Fahrtrichtungs- und -geschwindigkeitsdaten an den Schlepper 2 berücksichtigen, indem er für letzteren einen um die Länge des Auslaufrohrs 4 vergrößerten oder verkleinerten Kurvenradius und eine proportional zum Verhältnis der Kurvenradien angepasste Geschwindigkeit berechnet.

Sobald der Mähdrescher 1 in Schritt S1 die Meldung des Schleppers 2 über den Übergang in den ferngesteuerten Modus empfängt, kann er mit dem Überladen von Korn aus seinem Tank auf den Anhänger 3 beginnen. Es kann aber auch vorgesehen sein, dass mit dem Überladen erst nach einer gewissen Verzögerung nach Empfang der Bestätigung begonnen werden, um sicher zu gehen, dass die Fahrzeuge 1, 2 zuverlässig nebeneinander her fahren und diesen Zustand so lange wie nötig beibehalten können.

So lange sich der Schlepper 2 im ferngesteuerten Modus befindet, wird fortlaufend überprüft, ob der Fahrer irgendwelche Korrekturen an Fahrtrichtung und -geschwindigkeit des Schleppers 2 vornimmt. So wird etwa im Schritt S4 ermittelt, ob der Fahrer das Bremspedal des Schleppers betätigt hat. Wenn ja, schaltet der Steuerprozessor des Schleppers 2 in Schritt S5 augenblicklich in den fahrergesteuerten Modus zurück, so dass der Fahrer wieder die vollständige Kontrolle über den Schlepper 2 hat. So kann der Fahrer den Schlepper 2 auch aus dem ferngesteuerten Modus heraus ungehindert zum Stehen bringen, wenn dies erforderlich ist, um z.B. eine Kollision mit einem Hindernis zu vermeiden.

Die Rückkehr zum fahrergesteuerten Modus in Schritt S5 geht einher mit der Übertragung einer diesbezüglichen Meldung über die Funkschnittstellen 5 an den Mähdrescher 1. Dies gibt dem Fahrer oder einer Steuerung des Mähdreschers 1 die Möglichkeit, das Überladen umgehend abzubrechen, sodass kein Erntegut verloren geht, wenn sich das Auslaufrohr 4 nicht mehr über dem Anhänger 3 befindet.

In Schritt S6 überprüft der Steuerprozessor 7 des Schleppers 2, ob eventuell ein Fahrpedal des Schleppers 2 bis zum Anschlag durchgetreten ist. Wenn dies der Fall ist, so ist anzunehmen, dass es sich hier ebenfalls um eine Reaktion des Schlepperfahrers auf eine Gefahrensituation handelt. Daher geht auch in diesem Fall der Steuerprozessor unmittelbar zu Schritt S5 über, wechselt in den fahrergesteuerten Modus und sendet eine diesbezügliche Meldung an den Mähdrescher 1, um diesen zur Beendigung des Überladens zu veranlassen.

Entsprechend kann ein sofortiges Umschalten in den fahrergesteuerten Modus vorgesehen werden, wenn in Schritt S7 eine Betätigung der Lenkung erfasst worden ist. Da im ferngesteuerten Modus normalerweise kein Bedarf für einen Lenkeingriff besteht, ist die Tatsache, dass der Fahrer die Lenkung betätigt, unabhängig von der Amplitude der Lenkbewegung ein sicherer Hinweis darauf, dass er die volle Kontrolle über den Schlepper 2 benötigt.

Im Schritt S8 wird erneut die Stellung des Fahrpedals ausgewertet. Eine Betätigung des Fahrpedals führt in Schritt S9 zu einer Heraufsetzung der Sollgeschwindigkeit über den anhand der vom Mähdrescher 1 her empfangenen Informationen festgelegten Wert. Die Heraufsetzung der Sollgeschwindigkeit hat zur Folge, dass der Schlepper 2 langsam an Vorsprung gegenüber dem Mähdrescher 1 gewinnt, und dass der Punkt auf dem Anhänger 3, über dem sich die Auswurföffnung des Auslaufrohrs 4 befindet, im Bezug auf den Anhänger 3 nach hinten verlagert. So kann, wenn vor der Heraufsetzung der Sollgeschwindigkeit im Wesentlichen ein vorderer Bereich des Anhängers 3 beladen wurde, nun ein hinterer Bereich beladen werden. So wird das Erntegut gleichmäßig über die Ladefläche verteilt, und die Ladekapazität des Anhängers 3 wird voll ausgenutzt.

Die Betätigung eines Kupplungs- oder Inch-Pedals des Schleppers 2 führt im fahrergesteuerten Modus wie eine Betätigung der Bremse zur Verzögerung des Schleppers 2. Im ferngesteuerten Modus reagiert der Steuerprozessor auf eine Betätigung des Kupplungspedals nicht durch ein zwangsläufiges Öffnen der Kupplung; diese untersteht im ferngesteuerten Modus der ausschließlichen Kontrolle des Steuerprozessors 7. Statt dessen reagiert der Steuerprozessor 7 auf eine Betätigung des Kupplungspedals in Schritt S10 mit einer Herabsetzung der Sollgeschwindigkeit (Schritt S11), d.h. das Auslaufrohr 4 wandert über der Ladefläche des Anhängers 3 nach vorne.

So hat der Fahrer durch wahlweises Betätigen des Fahrpedals unterhalb des Anschlags oder Betätigen des Kupplungspedals die Möglichkeit, die Sollgeschwindigkeit des Schleppers 2 abweichend von der Geschwindigkeit des Mähdreschers 1 zu wählen und dadurch die Position des Auslaufrohrs 4 über dem Anhänger 3 jeweils so zu verändern, dass das Ladevermögen des Anhängers optimal ausgenutzt werden kann.

Einer Abwandlung des Verfahrens der Fig. 2 zufolge kann vorgesehen werden, dass in Schritt S7 nicht jede Betätigung der Lenkung zum Übergang in den fahrergesteuerten Modus führt, sondern nur ein Lenkeingriff, der einen vorgegebenen Grenzwinkel überschreitet. Dies gibt dem Fahrer des Schleppers 2 die Möglichkeit, im Falle einer einfachen Steuerautomatik, die nicht den Abstand zwischen Mähdrescher und Schlepper erfasst und konstant hält, diesen Abstand manuell konstant zu halten, ohne dass dies zum Abbruch des ferngesteuerten Modus führt.

Im Falle einer höher entwickelten Steuerautomatik, die eingerichtet ist, den Abstand zwischen Mähdrescher und Schlepper konstant zu halten, wird dem Fahrer dadurch, dass der ferngesteuerte Modus nicht verlassen wird, solange der Lenkeingriff unter dem Grenzwinkel bleibt, die Möglichkeit gegeben, zum Durchfahren einer Kurve den Abstand zwischen den Fahrspuren von Schlepper und Mähdrescher so zu variieren, dass auch in der Kurve der Schlepper in Überladeposition in Bezug auf den Mähdrescher bleibt. Anhand einer Anzeigeeinrichtung, die fortlaufend das Verhältnis zwischen dem Lenkeingriff und dem Grenzwinkel anzeigt, kann der Fahrer sich gegebenenfalls vergewissern, ob und wie weit er den Lenkeingriff noch verstärken kann, ohne dadurch den ferngesteuerten Modus zu verlassen.

Als eine weitere Abwandlung kann vorgesehen werden, dass eine Betätigung der Lenkung zum Übergang in den fahrergesteuerten Modus führt, wenn ihre Geschwindigkeit einen vorgegebenen Grenzwert übersteigt. Dies ermöglicht auch das Fahren von engen Kurven, ohne dass der ferngesteuerte Modus verlassen wird.

Falls über eine zu lange Zeit die Sollgeschwindigkeit des Schleppers höher oder niedriger als die Geschwindigkeit des Mähdreschers 1 oder die Fahrtrichtung des Schleppers 2 abweichend von der des Mähdreschers 1 gehalten wird, oder falls ein Korrekturmanöver zu heftig ausfällt, besteht die Möglichkeit, dass der Überlapp zwischen Auslaufrohr 4 und Anhänger 3 verloren geht. Um dies zu vermeiden, ist einer zweckmäßigen Weiterbildung zufolge vorgesehen, dass im ferngesteuerten Modus das Ausmaß einer Richtungs- oder Geschwindigkeitskorrektur beschränkt wird. So kann z.B. vorgesehen werden, dass im ferngesteuerten Modus eine Gaspedalbetätigung zu einer Geschwindigkeitssteigerung gegenüber der vom Mähdrescher 1 übertragenen Geschwindigkeit um maximal 2 km/h und eine Kupplungsbetätigung zu einer Verlangsamung um maximal 2 km/h führt, und/oder dass eine Lenkradbetätigung zu einer Abweichung von der vom Mähdrescher 1 übertragenen Richtung um maximal 2° führt. So bleibt dem Fahrer genügend Zeit, die Auswirkung eines Korrekturmanövers zu beobachten und es zu beenden, wenn eine gewünschte neue Relativposition der beiden Fahrzeuge 1, 2 erreicht ist.

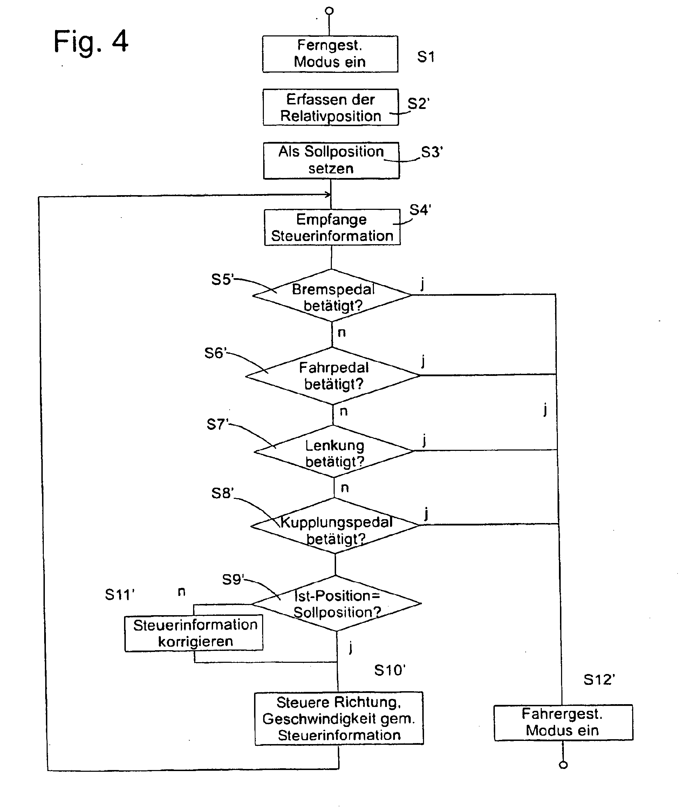

Ein Verlorengehen des Überlapps zwischen Auslaufrohr 4 und Anhänger 3 kann auch ausgeschlossen werden bei der im Folgenden mit Bezug auf Figuren 3 und 4 beschriebenen Ausgestaltung der Erfindung. Hier ist der Schlepper 2 mit Sensoren beliebiger Art zum Erfassen der Position des Mähdreschers 1, insbesondere seines Auslaufrohrs 4, in Bezug zum Schlepper 2 ausgestattet. Bei diesen Sensoren kann es sich z.B. um Ultraschallsensoren handeln, die vom Schlepper 2 aus, also schräg von unten, gegen das Auslaufrohr 4 ausgerichtet sind und daher ein weitgehend untergrundfreies Echo des Auslaufrohrs 4 auffangen können. Ein in Fig. 3 dargestellter Anzeigeschirm 8 ist in der Fahrerkabine des Schleppers 2 vorgesehen, um die Position des Mähdreschers 1 relativ zum Schlepper 2 darzustellen, hier in Form einer schematischen Draufsicht, die den Anhänger 3 und das darüber ragende Ende des Auslaufrohrs 4 zeigt. Benachbart zum Anzeigeschirm 7 ist ein Regler, z.B. ein Scrollrad 9, angeordnet, das dem Fahrer des Schleppers 2 die Möglichkeit gibt, eine abweichende Sollstellung des Auslaufrohrs 4 über den Anhänger 3 einzustellen. Die von der IstStellung abweichende Soll-Stellung des Auslaufrohrs 4 wird auf dem Anzeigeschirm 8 beispielsweise als gestrichelter Umriss 4' dargestellt. Die Fig. 3 zeigt nur ein Scrollrad 9 zum Verstellen der Sollposition in Längsrichtung des Anhängers 3; ein zweites zum Verstellen der Sollposition in Querrichtung kann vorgesehen sein.

Ein Flussdiagramm der zweiten Ausgestaltung ist in Fig. 4 dargestellt und wird im Folgenden beschrieben. Ein Umschalten in den ferngesteuerten Modus (S1) findet statt, wenn der Schlepper 2 eine zum Überladen geeignete Position am Mähdrescher 1 erreicht hat und der Fahrer des Schleppers 2 eine entsprechende Taste betätigt. Es ist auch möglich, mit Hilfe der Sensoren zu erfassen, wann sich das Auslaufrohr 4 in einer zum Überladen geeigneten Stellung über dem Anhänger 3 befindet und, wenn dies der Fall ist, automatisch in den ferngesteuerten Modus umzuschalten oder dem Fahrer des Schleppers 2 dann ein Signal anzuzeigen, das ihn auf die Möglichkeit, in den ferngesteuerten Modus umzuschalten, hinweist. Die zum Zeitpunkt des Umschaltens in den ferngesteuerten Modus vorliegende Position des Schleppers 2 relativ zum Mähdrescher 1 wird in Schritt S2' erfasst und in Schritt S3' als eine Soll-Relativposition gesetzt.

In Schritt S4' empfängt der Schlepper 2 Fahrtrichtungs- und Geschwindigkeitsinformation vom Mähdrescher 1. In der Folge (Schritte S5'-S8') werden diverse Steuerelemente des Schleppers 2 wie etwa Bremspedal, Fahrpedal, Lenkung oder Kupplungspedal auf Betätigung überprüft. Jede derartige Betätigung führt dazu, dass in Schritt S12' der fahrergesteuerte Modus wiederhergestellt und eine diesbezügliche Meldung an den Mähdrescher 1 gesandt wird, um diesen zu veranlassen, das Überladen von Erntegut zu unterbrechen.

Wenn der Schlepper 2 im ferngesteuerten Modus verbleibt, wird in Schritt S9' überprüft, ob die von den Sensoren erfasste Ist-Position des Auslaufrohrs 4 noch mit dessen Soll-Position übereinstimmt. Eine Abweichung zwischen Ist- und Soll-Position kann sich insbesondere ergeben, wenn der Fahrer wie oben beschrieben das Scrollrad 9 betätigt hat. Wenn keine Abweichung vorliegt, steuert der Steuerprozessor die Richtung und Geschwindigkeit des Schleppers 2 anhand der vom Mähdrescher 1 empfangenen Steuerinformation, d.h. die Position des Auslaufrohrs 4 über dem Anhänger 3 bleibt unverändert. Wenn jedoch eine Abweichung zwischen Ist- und Soll-Position festgestellt wird, korrigiert der Steuerprozessor 7 in Schritt S11' die Steuerinformation, das heißt er setzt die Soll-Geschwindigkeit je nach Richtung der Abweichung herauf oder herunter. So nimmt im Verlauf mehrerer Iterationen des Verfahrens der Fig. 4 die Abweichung immer weiter ab, und sobald in Schritt S9' festgestellt wird, dass Ist- und Soll-Position wieder übereinstimmen, wird wieder exakt an Hand der von Mähdrescher 1 gelieferten Steuerinformationen gesteuert. So kann durch ein- oder mehrmaliges Verstellen der Soll-Position des Auslaufrohrs 4 während eines Überladevorgangs der Fahrer des Schleppers 2 für eine gleichmäßige Verteilung des Ernteguts auf dem Anhänger 3 sorgen, ohne dass eine Gefahr des Verlorengehens der Überlappung von Auslaufrohr 4 und Anhänger 3 besteht.

Einer weiteren Ausgestaltung zufolge ist ein Regler mit dem Scrollrad 9 entsprechender Funktion, evtl. in Verbindung mit dem Anzeigeschirm 8, an Bord des Mähdreschers 1 vorgesehen. Ein Fahrer des Mähdreschers kann im Allgemeinen besser als der Fahrer des Transportfahrzeugs die Ladefläche beobachten und mit Hilfe des Scrollrads 9 den an das Transportfahrzeug 2 übertragenen, die Bewegung des Mähdreschers 1 beschreibenden Informationen ein Offset aufprägen, das zu einer allmählichen Veränderung der Position des Auslaufrohrs 4 über der Ladefläche des Anhängers 3 führt.

Die Erfindung wurde oben speziell in Bezug auf das Zusammenspiel von Mähdrescher und Transportfahrzeug beschrieben. Sie ist aber ohne weiteres auf andere zusammenarbeitende Paare von im Betrieb Material austauschenden landwirtschaftlichen Fahrzeugen wie etwa Transportfahrzeug und Verteilerfahrzeug für Saatgut, Dünger, Pflanzenschutzmittel etc. übertragbar.

### Bezugszeichen

- 1: Mähdrescher
- 2: Schlepper
- 3: Anhänger
- 4: Auswurfkrümmer
- 5: Funkschnittstelle
- 6: Steuerprozessor
- 7: Steuerprozessor
- 8: Anzeigeschirm
- 9: Scrollrad

## Patentansprüche

1. Landwirtschaftliches Fahrzeug mit einem ferngesteuerten Fahrmodus, in welchem eine Fahrbewegung des Fahrzeugs (2) durch von außen empfangene Information bestimmt wird, **dadurch gekennzeichnet, dass** das Fahrzeug eingerichtet ist, im ferngesteuerten Fahrmodus im Falle eines Fahrereingriffs (S8, S10) eine durch den Fahrereingriff bestimmte Korrektur an der von außen empfangenen Information vorzunehmen (S9, S11; S11').

2. Landwirtschaftliches Fahrzeug nach Anspruch 1, **dadurch gekennzeichnet, dass** es zwischen einem fahrergesteuerten Fahrmodus, in welchem die Fahrtbewegung des Fahrzeugs (2) durch den Fahrer bestimmt wird, und dem ferngesteuerten Fahrmodus umschaltbar ist.

3. Landwirtschaftliches Fahrzeug nach Anspruch 2, **dadurch gekennzeichnet, dass** es eingerichtet ist, im ferngesteuerten Fahrmodus eine vom Fahrer handhabbare Steuereinrichtung zu überwachen (S4, S6, S7; S5'-S8'), in den fahrergesteuerten Modus zurückzuschalten (S5; S12'), wenn ein Eingriff eines ersten Typs des Fahrers an der Steuereinrichtung erfasst wird, und unter Beibehaltung des ferngesteuerten Modus die durch den Fahrereingriff bestimmte Korrektur an der von außen empfangenen Information vorzunehmen (S9, S11; S11'), wenn ein Eingriff eines zweiten Typs erfasst wird.

4. Landwirtschaftliches Fahrzeug nach Anspruch 3, **dadurch gekennzeichnet, dass** die Steuereinrichtung (7) ein in wenigstens einem Freiheitsgrad kontinuierlich bewegbares Steuerelement aufweist und dass ein Eingriff des ersten Typs eine Bewegung des Steuerelements in dem wenigstens einen Freiheitsgrad ist, deren Amplitude einen Grenzwert erreicht oder überschreitet (S6), und ein Eingriff des zweiten Typs eine Bewegung des Steuerelements in dem wenigstens einen Freiheitsgrad ist, deren Amplitude den Grenzwert nicht überschreitet (S8).

5. Landwirtschaftliches Fahrzeug nach Anspruch 4, **dadurch gekennzeichnet, dass** das Steuerelement ein Fahrpedal ist und dass der Grenzwert eine Anschlagstellung des Fahrpedals ist.

6. Landwirtschaftliches Fahrzeug nach Anspruch 3, **dadurch gekennzeichnet, dass** die Steuereinrichtung ein in wenigstens einem Freiheitsgrad kontinuierlich bewegbares Steuerelement aufweist und dass ein Eingriff des ersten Typs eine Bewegung des Steuerelements in dem wenigstens einen Freiheitsgrad ist, deren Geschwindigkeit einen Grenzwert erreicht oder überschreitet, und ein Eingriff des zweiten Typs eine Bewegung des Steuerelements in dem wenigstens einen Freiheitsgrad ist, deren Geschwindigkeit den Grenzwert nicht überschreitet.

7. Landwirtschaftliches Fahrzeug nach einem der Ansprüche 4 bis 6, **gekennzeichnet durch** eine Anzeigeeinrichtung zum Anzeigen der Beziehung der Stärke des Eingriffs zu dem Grenzwert.

8. Landwirtschaftliches Fahrzeug nach Anspruch 3, **dadurch gekennzeichnet, dass** die Steuereinrichtung ein in wenigstens einem Freiheitsgrad kontinuierlich bewegbares Steuerelement und ein Hilfsbedienelement mit wenigstens zwei Zuständen aufweist und dass eine Bewegung des Steuerelements je nach Zustand des Hilfsbedienelements als Eingriff des ersten Typs oder als Eingriff des zweiten Typs erfasst wird.

9. Landwirtschaftliches Fahrzeug nach Anspruch 3, **dadurch gekennzeichnet, dass** die Steuereinrichtung ein erstes Steuerelement zum Steuern einer unter Fahrtrichtung und -geschwindigkeit gewählten Größe und ein zweites Steuerelement (9) zum Beeinflussen derselben Größe wenigstens im ferngesteuerten Modus aufweist und dass das Fahrzeug eingerichtet ist, einen Fahrereingriff am ersten Steuerelement als Eingriff des ersten Typs zu erfassen (S4; S5'-S8') und einen Fahrereingriff am zweiten Steuerelement (9) als Eingriff des zweiten Typs zu erfassen (S10; S11').

10. Landwirtschaftliches Fahrzeug nach Anspruch 9, **dadurch gekennzeichnet, dass** das erste Steuerelement ein Bremspedal und das zweite Steuerelement ein Kupplungspedal ist.

11. Landwirtschaftliches Fahrzeug nach Anspruch 9, **dadurch gekennzeichnet, dass** an dem zweiten Bedienelement (9) eine Sollposition des Fahrzeugs (2) relativ zu einem Bezugspunkt (4) einstellbar ist.

12. Landwirtschaftliches Fahrzeug nach Anspruch 11, **dadurch gekennzeichnet, dass** es ein Anzeigeelement (8) zum Darstellen der Sollposition aufweist.

13. Landwirtschaftliches Fahrzeug nach einem der vorhergehenden Ansprüche, **dadurch gekennzeichnet, dass** es zum Empfang der Fahrtrichtung und -geschwindigkeit bestimmenden Information im ferngesteuerten Modus eine Funkschnittstelle (5) aufweist.

14. Landwirtschaftliches Fahrzeug nach Anspruch 13, soweit auf Anspruch 2 rückbezogen, **dadurch gekennzeichnet, dass** die Funkschnittstelle (5) eingerichtet ist, bei einem Übergang in den fahrergesteuerten Modus (S5; S12') und/oder bei einem Übergang in den ferngesteuerten Modus (S1) eine Meldung auszusenden.

15. Verfahren zum gemeinsamen Betreiben zweier landwirtschaftlicher Fahrzeuge (1, 2) mit den Schritten:
- Übertragen von eine Fahrbewegung eines der beiden Fahrzeuge beschreibender Information von dem einen an das andere Fahrzeug;
- Steuern des anderen Fahrzeugs anhand der übertragenen Information;
- Erfassen von Steuereingriffen des Fahrers des anderen Fahrzeugs (S4, S6-S8, S10; S4'-S9') ; **gekennzeichnet durch** den weiteren Schritt :
- Korrigieren der Information anhand eines erfassten Steuereingriffs.

## Claims

1. Agricultural vehicle having a remotely controlled mode of travel in which movement of the vehicle (2) as it travels is determined by information received from outside, **characterised in that**, in the event of an intervention (S8, S10) by the driver, the vehicle is set up to make (S9, S11, S11'), in the remotely controlled mode of travel, a correction determined by the driver's intervention to the information received from outside.

2. Agricultural vehicle according to claim 1, **characterised in that** it is switchable between a driver-controlled mode of travel in which the movement of the vehicle (2) as it travels is determined by the driver, and the remotely controlled mode of travel.

3. Agricultural vehicle according to claim 2, **characterised in that**, in the remotely controlled mode of travel, it is set up to monitor (S4, S6, S7; S5'-S8') a controlling arrangement, able to be manipulated by the driver, to switch back (S5; S12') to the driver-controlled mode if an intervention of a first type by the driver at the controlling arrangement is sensed, and, while remaining in the remotely controlled mode, to make (S9, S11; S11') the correction determined by the driver's intervention to the information received from outside if an intervention of a second type is sensed.

4. Agricultural vehicle according to claim 3, **characterised in that** the controlling arrangement (7) has a control member able to be moved continuously in at least one degree of freedom and **in that** an intervention of a first type is a movement of the control member in the at least one degree of freedom whose amplitude reaches or exceeds (S6) a limiting value and an intervention of the second type is a movement of the control member in the at least one degree of freedom whose amplitude does not exceed (S8) the limiting value.

5. Agricultural vehicle according to claim 4, **characterised in that** the control member is an accelerator pedal and **in that** the limiting value is an abutting position of the accelerator pedal.

6. Agricultural vehicle according to claim 3, **characterised in that** the controlling arrangement has a control member able to be moved continuously in at least one degree of freedom and **in that** an intervention of the first type is a movement of the control member in the at least one degree of freedom whose speed reaches or exceeds a limiting value and an intervention of the second type is a movement of the control member in the at least one degree of freedom whose speed does not exceed the limiting value.

7. Agricultural vehicle according to one of claims 4 to 6, **characterised by** an indicating arrangement for indicating the relationship of the magnitude of the intervention to the limiting value.

8. Agricultural vehicle according to claim 3, **characterised in that** the controlling arrangement has a control member able to be moved continuously in at least one degree of freedom, and an auxiliary operating member having at least two states, and **in that** a movement of the control member is sensed as an intervention of the first type or an intervention of the second type depending on the state of the auxiliary operating member.

9. Agricultural vehicle according to claim 3, **characterised in that** the controlling arrangement has a first control member for controlling a variable which is selected from direction of travel and speed of travel and a second control member (9) for acting on this same variable at least in the remotely controlled mode, and **in that** the vehicle is set up to sense (S4; S5'-S8') an intervention by the driver on the first control member as an intervention of the first type and to sense (S10; S11') an intervention by the driver on the second control member (9) as an intervention of the second type.

10. Agricultural vehicle according to claim 9, **characterised in that** the first control member is a brake pedal and the second control member is a clutch pedal.

11. Agricultural vehicle according to claim 9, **characterised in that** a desired position of the vehicle (2) relative to a reference point (4) can be set at the second operating member (9).

12. Agricultural vehicle according to claim 11, **characterised in that** it has an indicating member (8) to show the desired position.

13. Agricultural vehicle according to one of the preceding claims, **characterised in that** it has a radio interface (5) to receive, in the remotely controlled mode, the information determining the direction of travel and speed of travel.

14. Agricultural vehicle according to claim 13, when referred back to claim 2, **characterised in that** the radio interface (5) is set up to emit a message in the event of a transition to the driver-controlled mode (S5; S12') and/or in the event of a transition to the remotely controlled mode (S1).

15. Method of operating two agricultural vehicles (1, 2) together, having the steps of:
- transmitting to the other vehicle information defining a movement of one of the two vehicles as it travels,
- controlling the other vehicle by reference to the information transmitted,
- sensing the controlling interventions (S4, S6-S8, S10; S4'-S9') by the driver of the other vehicle, **characterised by** the further step of
- correcting the information by reference to the controlling intervention which is sensed.

## Revendications

1. Engin agricole ayant un mode de déplacement télécommandé dans lequel le déplacement de l'engin (2) est déterminé par des informations reçues de l'extérieur, **caractérisé en ce que**, en cas d'action (S8, S10) par le conducteur, l'engin permet de faire (S9, S11, S11'), en mode de déplacement télécommandé, une correction déterminée par l'action du conducteur suite aux informations reçues de l'extérieur.

2. Engin agricole selon la revendication 1, **caractérisé en ce qu'**il est apte à être commuté entre un mode de déplacement commandé par le conducteur dans lequel le déplacement de l'engin (2) est déterminé par le conducteur, et le mode de déplacement télécommandé.

3. Engin agricole selon la revendication 2, **caractérisé en ce que**, en mode de déplacement télécommandé, il permet de suivre (S4, S6, S7; S5'-S8') un dispositif de commande, capable d'être manipulé par le conducteur, de repasser (S5; S12') au mode commandé par le conducteur si une action d'un premier type par le conducteur au niveau du dispositif de commande est détectée, et, tout en restant en mode télécommandé, de faire (S9, S11; S11') la correction déterminée par l'action du conducteur suite aux informations reçues de l'extérieur si une action d'un second type est détectée.

4. Engin agricole selon la revendication 3, **caractérisé en ce que** le dispositif de commande (7) a un élément de commande capable d'être déplacé continuellement dans au moins un degré de liberté et **en ce qu'**une action d'un premier type est un déplacement de l'élément de commande dans le au moins un degré de liberté dont l'amplitude atteint ou dépasse (S6) une valeur limitante et une action du second type est un déplacement de l'élément de commande dans le au moins un degré de liberté dont l'amplitude ne dépasse pas (S8) la valeur limitante.

5. Engin agricole selon la revendication 4, **caractérisé en ce que** l'élément de commande est une pédale d'accélérateur et **en ce que** la valeur limitante est une position de butée de la pédale d'accélérateur.

6. Engin agricole selon la revendication 3, **caractérisé en ce que** le dispositif de commande a un élément de commande capable d'être déplacé continuellement dans au moins un degré de liberté et **en ce qu'**une action du premier type est un déplacement de l'élément de commande dans le au moins un degré de liberté dont la vitesse atteint ou dépasse une valeur limitante et une action du second type est un déplacement de l'élément de commande dans le au moins un degré de liberté dont la vitesse ne dépasse pas la valeur limitante.

7. Engin agricole selon l'une des revendications 4 à 6, **caractérisé par** un dispositif indicateur pour indiquer le rapport entre l'ampleur de l'action et la valeur limitante.

8. Engin agricole selon la revendication 3, **caractérisé en ce que** le dispositif de commande a un élément de commande capable d'être déplacé continuellement dans au moins un degré de liberté, et un élément d'actionnement auxiliaire ayant au moins deux états, et **en ce qu'**un déplacement de l'élément de commande est détecté comme une action du premier type ou une action du second type en fonction de l'état de l'élément d'actionnement auxiliaire.

9. Engin agricole selon la revendication 3, **caractérisé en ce que** le dispositif de commande a un premier élément de commande pour commander une variable qui est sélectionnée parmi le sens de déplacement et la vitesse de déplacement et un second élément de commande (9) pour agir sur cette même variable au moins en mode télécommandé, et **en ce que** l'engin permet de détecter (S4; S5'-S8') une action par le conducteur sur le premier élément de commande comme une action du premier type et de détecter (S10; S11') une action par le conducteur sur le second élément de commande (9) comme une action du second type.

10. Engin agricole selon la revendication 9, **caractérisé en ce que** le premier élément de commande est une pédale de frein et le second élément de commande est une pédale d'embrayage.

11. Engin agricole selon la revendication 9, **caractérisé en ce qu'**une position désirée de l'engin (2) relative à un point de référence (4) peut être réglée au niveau du second élément d'actionnement (9).

12. Engin agricole selon la revendication 11, **caractérisé en ce qu'**il a un élément indicateur (8) pour montrer la position désirée.

13. Engin agricole selon l'une des revendications, précédentes, **caractérisé en ce qu'**il a une interface radio (5) pour recevoir, en mode télécommandé, les informations déterminant le sens de déplacement et la vitesse de déplacement.

14. Engin agricole selon la revendication 13, lorsque cette dernière se rapporte à la revendication 2, **caractérisé en ce que** l'interface radio (5) permet d'émettre un message en cas de transition au mode commandé par le conducteur (S5; S12') et/ou en cas de transition au mode télécommandé (S1).

15. Procédé d'actionnement de deux engins agricoles (1, 2) ensemble, comportant les étapes suivantes:
- la transmission d'informations définissant un déplacement de l'un des deux engins vers l'autre engin,
- la commande de l'autre engin par référence aux informations transmises,
- la détection des actions de commande (S4, S6-S8, S10; S4'-S9') par le conducteur de l'autre engin, **caractérisé par** l'autre étape suivante :
- la correction des informations par référence à l'action de commande qui est détectée.
